# EUROPEAN PATENT APPLICATION

(11) **EP 4 335 612 A1**
(43) Date of publication of application: **13.03.2024**
(21) Application number: 23192880.5
(22) Date of filing: 23.08.2023
(51) Int. Cl.: B29C 48/92, B29C 48/21, B29C 48/49, B29D 30/00, B29C 48/12

(54) **TIRE TREAD PRODUCTION LINE AND METHOD FOR MANUFACTURING A TIRE TREAD**

(30) Priority: 30.08.2022 US 202217823118
(71) Applicant: The Goodyear Tire & Rubber Company, Akron, OH 44316 (US)
(72) Inventor: SCHWEITZER, Claude, L-7750 Colmar-Berg (LU); KAES, Christian, Jean-Marie, L-9184 Schrondweiler (LU); DELROISSE, Pauline Monique Marie-Lucie Ghislaine, B-6741 Vance (BE); ORLEWSKI, Pierre Felix, 9021 Ettelbruck (LU); FREYLINGER, Michael, B-6700 Arlon (BE); FOURME, Sylvain, L-7663 Medernach (LU)
(74) Representative: Kutsch, Bernd

(57) **Abstract**

A tire tread production line and a method for manufacturing a tire tread is disclosed. The production line comprises: a coextruder (12) for coextruding at least two rubber compositions, the coextruder (12) comprising at least two feeding inlets (22) for receiving the at least two rubber compositions, the coextruder (12) further comprising one or at least two screws (24) for driving the received at least two rubber compositions, an extrusion die (26) for forming a multi-layer tire tread extrudate (128), the one or the at least two screws (24) being configured to drive the at least two rubber compositions in the extrusion die (26); a THz sensor (14), the THz sensor being configured to irradiate the multi-layer tire tread extrudate (28) with THz electromagnetic radiation, and receiving a response of the multi-layer tire tread extrudate (28) to the THz electromagnetic radiation; and a controller (18) operatively connected to the coextruder (12) and to the THz sensor (14), the controller (18) being configured to operate the coextruder (12) based on the response of the multi-layer tire tread extrudate (28) to the THz electromagnetic radiation.

## Description

### Field of the Invention

The present invention generally relates to a tire tread production line and a method for manufacturing a tire tread.

### Background of the Invention

The manufacture of treads for vehicle tires is typically made with extruders. It is usual for treads to be formed of several layers of material which may be made of different materials in order to provide the desired performance. It is important that the tread layer have a controlled thickness for tire uniformity and performance, in particular, sub-millimeter precision is highly beneficial. Controlled rubber compositions are also of importance. It is known to use radar technology for tread thickness measurements during manufacture, which has significant limitations.

EP 2 985 585 A1 discloses a method for testing a tire, the tire being irradiated with electromagnetic radiation in the terahertz (THz) frequency range. The radiation reflected from the tire is received and evaluated.

### Summary of the Invention

The invention relates to a production line in accordance with claim 1 and to a method in accordance with claim 12.

Dependent claims refer to preferred embodiments of the invention.

A preferred aspect of the present invention relates to a tire tread production line. The tire tread production line comprises: a coextruder for coextruding at least two rubber compositions, the coextruder comprising at least two feeding inlets for receiving the at least two rubber compositions, the coextruder further comprising at least two screws for driving (guiding) the received at least two rubber compositions, an extrusion die for forming a multi-layer tire tread extrudate, the at least two screws being configured to drive (guide) the at least two rubber compositions in the extrusion die; a THz sensor; the THz sensor being configured to irradiate the multi-layer tire tread extrudate with THz electromagnetic radiation, and receiving a response of the multi-layer tire tread extrudate to the THz electromagnetic radiation; a controller operatively connected to the coextruder and to the THz sensor, the controller being configured to operate the coextruder based on the response of the multi-layer tire tread extrudate to the THz electromagnetic radiation.

In a preferred embodiment, the production line comprises a conveyor belt for conveying the multi-layer tire tread extrudate from the coextruder to the THz sensor.

The THz electromagnetic radiation has a frequency in the range of from 50 GHz to 10 THz, preferably in the range of from 50 GHz to 1 THz, more preferably in the range of from 50 GHz to 400 GHz.

The electromagnetic radiation is preferably a pulsed electromagnetic radiation.

The electromagnetic radiation may also be a continuous wave THz electromagnetic radiation.

The controller is preferably configured to determine a thickness of at least one of the layers of the multi-layer tire tread extrudate based on the response of the multi-layer tire tread extrudate to the THz electromagnetic radiation, the controller being configured to operate the coextruder based on the determined thickness.

The response of the multi-layer tire tread extrudate to the THz electromagnetic radiation preferably comprises one or more echoes of the THz electromagnetic radiation, the one or more echoes being reflection and/or transmission of the THz electromagnetic radiation on one or more interfaces of the multi-layer tire tread extrudate. The controller is preferably configured to determine the thickness based one the received one or more echoes.

The tire tread production line may further comprise a second THz sensor arranged opposite from the THz sensor with respect to the multi-layer tire tread extrudate. The controller may further be configured to operate the coextruder based on a response, received by the second THz sensor, of the multi-layer tire tread extrudate to the THz electromagnetic radiation. The second THz sensor may also be configured to irradiate the multi-layer tire tread extrudate with THz electromagnetic radiation. The THz sensor and the second THz sensor may be configured to sequentially irradiate the multi-layer tire tread extrudate with THz electromagnetic radiation, i.e., the sensors do not irradiate the multi-layer tire tread extrudate concurrently. Alternatively, the THz sensor and the second THz sensor may irradiate the multi-layer tire tread extrudate concurrently.

The second THz sensor is preferably arranged below the multi-layer tire tread extrudate, and the THz sensor is preferably arranged above the multi-layer tire tread extrudate. The second THz sensor and the THz sensor are preferably arranged collinearly.

The coextruder may comprise a pressure sensor for sensing the pressure of at least one of the at least two rubber compositions in the coextruder. The controller may further be configured to operate the coextruder based on the sensed pressure.

The controller is preferably configured to operate the at least two screws based on the response of the multi-layer tire tread extrudate to the THz electromagnetic radiation.

The tire tread production line may comprise a refractive index increaser feeder, the controller being operatively connected to refractive index increaser feeder. The controller may be configured to add refractive index increaser in at least one of the least two rubber compositions so as to increase a difference of refractive index between the at least two rubber compositions, based on the response of the multi-layer tire tread extrudate to the THz electromagnetic radiation.

The refractive index increaser may comprise (or consist of) at least one of carbon black, titanium dioxide and aluminum hydroxide.

A further preferred aspect of the present invention relates to a method for manufacturing a tire tread. The method comprises: coextruding at least two rubber compositions with a coextruder, the coextruding comprising feeding the at least two rubber compositions in the coextruder, driving (guiding) the received at least two rubber compositions with at least two screws, forming, by an extrusion die, a multi-layer tire tread extrudate with the driven (guided) rubber compositions; irradiating, with the THz sensor, the multi-layer tire tread extrudate with THz electromagnetic radiation; receiving, with the THz sensor, a response of the multi-layer tire tread extrudate to the THz electromagnetic radiation; operating the coextruder, with a controller operatively connected to the coextruder, based on the response of the multi-layer tire tread extrudate to the THz electromagnetic radiation.

In a preferred embodiment, the method may comprise conveying the multi-layer tire tread extrudate from the coextruder to a THz sensor with a conveyor belt.

The THz electromagnetic radiation has a frequency in the range of from 50 GHz to 10 THz, preferably in the range of from 50 GHz to 1 THz, more preferably in the range of from 50 GHz to 400 GHz.

The electromagnetic radiation is preferably a pulsed electromagnetic radiation.

The electromagnetic radiation may also be a continuous wave THz electromagnetic radiation.

The response of the multi-layer tire tread extrudate to the THz electromagnetic radiation may comprise one or more echoes of the THz electromagnetic radiation, the one or more echoes being reflection and/or transmission of the THz electromagnetic radiation on one or more interfaces of the multi-layer tire tread extrudate. The method may comprise determining, by the controller, the thickness based on the received one or more echoes.

The method may further comprise determining, by the controller, a thickness of at least one of the layers of the multi-layer tire tread extrudate based on the response of the multi-layer tire tread extrudate to the THz electromagnetic radiation; and optionally, operating, by the controller, the coextruder based on the determined thickness.

The method may further comprise receiving a response of the multi-layer tire tread extrudate to the THz electromagnetic radiation by a second THz sensor arranged opposite from the THz sensor with respect to the multi-layer tire tread extrudate. Optionally, the method comprises operating, by the controller, the coextruder based on a response, received by the second THz sensor of the multi-layer tire tread extrudate to the THz electromagnetic radiation.

The method may comprise sensing the pressure of at least one of the at least two rubber compositions in the coextruder, and operating, by the controller, the coextruder based on the sensed pressure.

The method may comprise operating the at least two screws based on the response of the multi-layer tire tread extrudate to the THz electromagnetic radiation.

The method may comprise adding refractive index increaser in at least one of the least two rubber compositions so as to increase a difference of refractive index of the at least two rubber compositions, wherein the addition is controlled by the controller and based on the response of the multi-layer tire tread extrudate to the THz electromagnetic radiation.

The refractive index increaser may comprise (or consist of) at least one of carbon black, titanium dioxide and aluminum hydroxide.

### Definitions

As used herein, the term "rubber" is intended to include both natural rubber compositions and synthetic rubber compositions. Unless otherwise specified, "rubber" designates an uncured rubber. The expression "rubber composition", "compounded rubber", and "rubber compound" or "rubber composition" may be used interchangeably to refer to rubber (elastomer), which has been blended or mixed with various ingredients and materials, e.g., reinforcing fillers, precipitated amorphous silica, or the like. Specific examples of rubbers include neoprene (polychloroprene), polybutadiene (e.g., cis-1,4-polybutadiene), polyisoprene (e.g., cis-1 ,4-polyisoprene), butyl rubber, halobutyl rubber (such as, e.g., chlorobutyl rubber or bromobutyl rubber), styrene/isoprene/butadiene rubber, copolymers of 1,3-butadiene or isoprene with monomers such as, e.g., styrene, acrylonitrile and methyl methacrylate. Other types of rubber include carboxylated rubber, silicon-coupled rubber, or tin-coupled star-branched polymers. "Curable rubber" designates rubber that has been at most partially cured and that can be cured (vulcanized) further. Curable rubber may include green rubber. Cured rubber may typically be obtained from unsaturated rubber by sulfur or non-sulfur vulcanization. The rubber need not be completely cured, i.e., its molecular chains may contain residual cure sites (e.g., allylic positions) available for crosslinking with other molecular chains.

As used herein, the term "refractive index increaser" is an additive which increases the refractive index of the composition to which it is added to.

As used herein, the term "refractive index lowerer" is an additive which lowers the refractive index of the composition to which it is added to.

As used herein, the term "refractive index modifier" is an additive which modifies the refractive index of the composition to which it is added to.

The expression "phr" stands for parts by weight in relation to 100 parts by weight of pure rubber (elastomer).

As used herein, the term "tire tread" outermost element of a tire that is configured to make contact with the road or the ground.

The expression "electrically conductive rubber", as used herein, designates rubber having a volume resistivity at room temperature (20° C) of less than 108 Ω·cm, or, more preferably, of less than 106 Ω·cm. Electrically conductive rubber may be obtained from a mix of different rubber compositions, provided that the resulting volume resistivity is as defined above. Electrically conductive rubber can be obtained by blending elastomer(s) with one or more electrically conducting materials (e.g., in the form of a powder, flakes, filaments, etc.).

The expression "electrically non-conductive rubber", as used herein, designates rubber having a volume resistivity at a room temperature (20°C) equal to or greater than 108 Ω·cm. Electrically non-conductive rubber may be obtained by using non-conducting filler or reinforcing material(s). However, electrically non-conductive rubber may contain electrically conducting components, provided that the resulting volume resistivity is higher than the above-defined threshold value. Electrically non-conductive rubber may be produced, e.g., with non-conducting filler, such as, e.g, silica.

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment", "one embodiment", "embodiments", etc., this means that these embodiments may be combined with one another. Furthermore, the features of those embodiments can be used in the combination explicitly presented but also that the features can be combined across embodiments without departing from the invention, unless it follows from context that features cannot be combined.

### Brief Description of the Drawings

The invention will be described by way of example and with reference to the accompanying drawings in which:
FIG. 1 is a schematic representation of a simplified production line according to an embodiment of the present invention;
FIG. 2 is a schematic representation of a THz sensor in a direction transversal to the conveying direction of the production line according to an embodiment of the present invention;
FIG. 3 is a schematic representation of a simplified production line according to an embodiment of the present invention; and
FIG. 4 is a schematic representation of an arrangement for a THz sensor of a production line according to an embodiment of the present invention.

The reader's attention is drawn to the fact that the drawings are not to scale. Furthermore, for the sake of clarity, proportions between height, length and/or width may not have been represented correctly.

### Detailed Description of Preferred Embodiments of the Invention

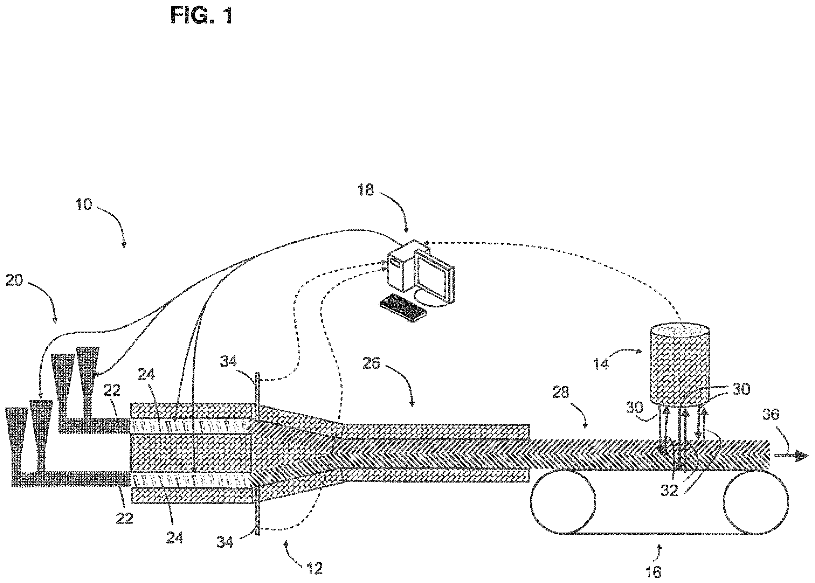

FIG. 1 schematically depicts a simplified tire tread production line 10 according to an embodiment of the present invention. The tire tread production line 10 comprises a coextruder 12, a THz sensor 14, a conveyor belt 16, a controller 18, as well as feeders 20. The production line 10 is particularly well suited for producing high performance tire treads, as will be apparent from the following. Of course, any kind of tire tread may be produced by production lines according to the present invention.

The coextruder 12 comprises two feeding inlets 22 for receiving rubber compositions. The compositions are provided to the inlets 22 of the coextruder 12 by the feeders 20. The coextruder 12 further comprises two screws 24 for driving the received respective rubber compositions. In addition, the coextruder 12 includes an extrusion die 26 for forming a multi-layer tire tread extrudate 28. The tire tread extrudate 28 is conveyed by the conveyor belt 16 to the THz sensor 14 for analysis (e.g. quality control), which will be described in greater detail below. The multi-layer tire tread extrudate 28 as depicted in FIG. 1 comprises two rubber layers.

The controller 18 is operatively connected to the coextruder 12 and to the THz sensor 14. The controller is configured to operate the coextruder based on the information provided by the THz sensor 14. In other words, a feedback loop is implemented in the tire tread production line 10, wherein the input is provided by the sensor 14 and the target is a particular target tire tread. The feedback loop is a negative feedback loop thereby cancelling, or at least mitigating, fluctuations with respect to the target tire tread by operating the coextruder 12 accordingly. The target tire tread may be stored in the controller 18 or stored remotely and accessed by the controller 18.

The THz sensor 14 may comprise a THz emitter as well as a THz receiver. The THz sensor 14 is configured to irradiate the multi-layer tire tread extrudate 28 with a THz electromagnetic radiation 30. The THz electromagnetic radiation has a frequency in the range of from 50 GHz to 10 THz, preferably in the range of from 50 GHz to 1 THz, more preferably in the range or from 50 GHz to 400 GHz.

The THz electromagnetic radiation may be a pulsed THz electromagnetic radiation or a continuous wave THz electromagnetic radiation.

Each optical interface of the multi-layer tire tread extrudate 28 will provide for (partial) reflection 32 and transmission of the irradiated THz electromagnetic radiation. The THz sensor 14 may be configured to receive THz electromagnetic radiation reflected 32 by the multi-layered tire tread extrudate 28. The characterization carried out by controller 18 on the basis of the received THz electromagnetic radiation received by the THz sensor 14 may comprise determining the thickness of at least one of the layers based on the received THz electromagnetic radiation. For example, the determination may be based on time difference between the irradiated electromagnetic radiation and one or more (reflected) echoes of the received THz radiation.

Alternatively or additionally, the characterization carried out by the controller 18 may comprise detecting the presence or the absence of electrically conductive rubber, also referred to as "conductive chimney" in this document, and optionally, the electrical conductivity thereof by e.g. determining the ratio between the THz radiation received 32 by the THz sensor 14 and the incident THz radiation 30.

It will be appreciated that the translation of the sensor(s) as disclosed hereinafter, combined with detected the increase (resp. decrease) in the ratio also allows for determining the width and/or length of the conductive chimney.

It will be appreciated that the scanning combined with the increase (resp. decrease) in the ratio also allows for determining the width and/or length of the conductive chimney.

Based on the characterization (e.g. thickness and/or conductivity), the controller 18 may operate the coextruder 26 and/or the feeders 20 so as to mitigate or cancel deviations from the target extrudate. For example, the controller may change the rotation speed of at least one of the screws 24 so as to change the flow rate of a rubber composition in the extrusion die 26, should the thickness of one of the layers is found to be not thick enough with respect to the target thickness. Also, for example, the controller 18 may operate the feeders 20 so as to change the rubber composition (for example by adding a component that is more electrically conductive so that the rubber becomes an electrically conductive rubber, i.e. not an electrically non-conductive rubber anymore), should a conductive chimney not be detected (or not having the target electrical conductivity).

In an embodiment, the coextruder 12 is equipped with one or more pressure sensors 34 for sensing the pressure of the rubber compositions in the coextruder 12, in particular at the outlet of the screws 24. The sensed pressures may be provided to the controller 18 so that the coextruder 12 and/or the feeders 20 may be operated by the controller on that basis. In other words, the controller may be configured to operate the coextruder 12 and/or the feeders 20 based on the sensed pressure.

The controller 18 may also be configured to operate a feeder comprising a refractive index modifier (e.g. increaser or lowerer). In case the two rubber compositions having refractive indices that are very close to each other, it may be difficult to accurately detect the interface between the two rubber compositions. In that case, the controller may operate the feeder that comprises the refractive index modifier so as to increase the refractive index difference between the two compositions thereby providing an interface that can be accurately detected by the THz sensor 14.

The refractive index modifier may be added in an amount of from 0.01 phr to 7 phr, preferably in an amount of from 0.1 phr to 6 phr, more preferably in an amount of from 1 phr to 5 phr. The refractive index modifier (in particular increaser) may comprise (or consist of) at least one of carbon black, titanium dioxide and aluminum hydroxide. Examples of suitable carbon black include N134, N220, N347, N550 and Orion Printex carbon blacks.

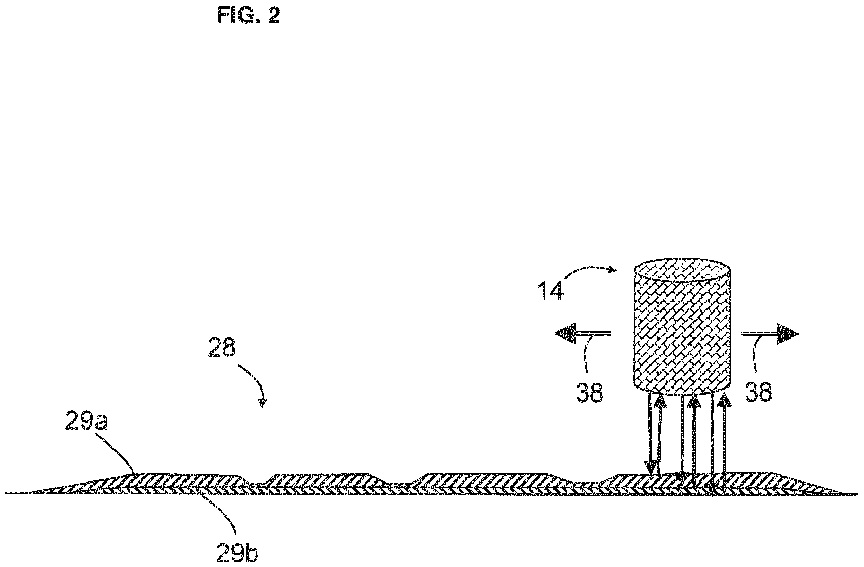

FIG. 2 shows a transverse view of the tire tread extrudate 28. The tire tread extrudate 28 comprises a first rubber layer 29a and a second rubber layer 29b. The first and second rubber layers 29a, 29b may comprise a tread pattern comprising grooves. The grooves may span only one rubber layer in depth, or multiple rubber layers. The target extrudate may comprise a target geometry of the tread pattern, so that the feedback loop mitigates (or cancels) deviations from the desired target geometry of the tread pattern. It is worthwhile noting that the controller 18 not only operates the coextruder 12 and/or the feeders 20 to mitigate (or cancel) deviations of the surface of the tire but also the geometry of the optional inner layers that may not visible to the human eye. As also indicated above, deviations of the electrical conductivity of the layers may also be mitigated (cancelled).

The THz sensor 14 may be translated 38 in a direction transversal to the conveying direction 36 of the tread in the production line. The translation in the transversal direction and the conveying of the tread may be controlled by the controller 18. It will be appreciated that any location of the tire tread extrudate 28 may be controlled.

It will be appreciated that the production line according to the present invention and the corresponding method for manufacturing a tire tread according to the present invention allow for manufacturing a tire tread having a sub-millimeter precision in the thickness of the layers making the tire tread. This is highly beneficial, especially for high performance tires.

It will be understood that any number of layers (greater than two) may be achieved depending on the coextruder (or plurality of coextruders) and configuration of the production line. It will be appreciated that the production line may comprise multiple sets of a coextruder 12, a THz sensor 14, a conveyor belt 16, a controller 18, as well as a feeders 20, and that the process disclosed above may be performed on any, or all of these multiple sets and the extrudates joined in a further step of the manufacturing process.

The production line may comprise an oven for curing the extrudate.

Also, a THz sensor may be placed at multiple locations in the production line, e.g. at the coextruder outlet, at the oven inlet and/or at the oven outlet. This may be particularly advantageous not only for quality control of the final product at the end of the production line but also as an online control of the production line (during production).

The controller 18 may comprise an application-specific integrated circuit (ASIC), a system on a chip (SoC), a programmable logical device (PLD), common microprocessor, a field-programmable gate array (FPGA), an erasable programmable logic device (EPLD), a complex programmable logic device (CPLD), a programmable logic array (PLA). Combinations thereof are also contemplated.

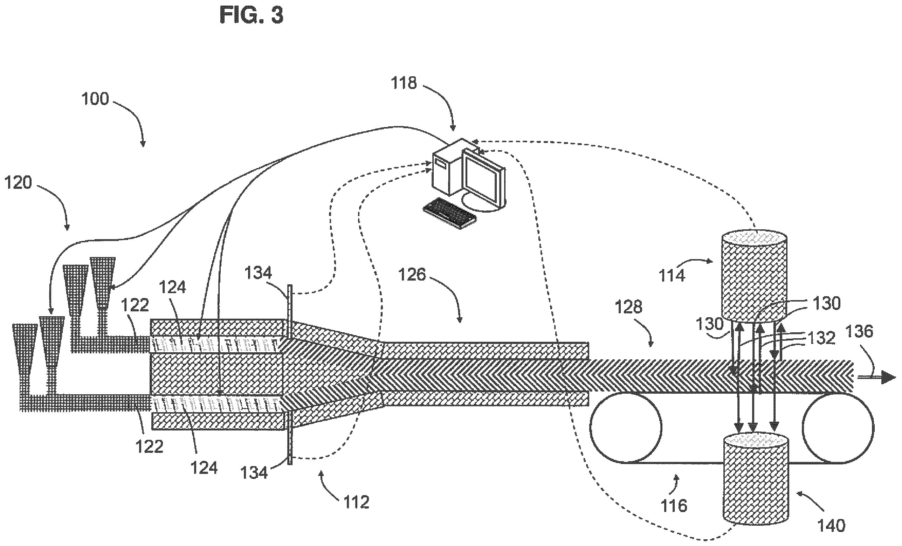

FIG. 3 schematically depicts a simplified tire tread production line 10 according to an embodiment of the present invention. The embodiment depicted in FIG. 3 differs from the one depicted in FIG. 1 only in that the production line comprises a second THz sensor 140. The second THz sensor 140 may be arranged opposite of the THz sensor 114 with respect to the tire tread extrudate 128 so that the electromagnetic radiation that is transmitted though the tire tread extrudate 128 is received by the second THz sensor 140. This is particularly advantageous since information on the reflected and transmitted radiation may be combined by the controller 118 in order to operate the extruder 112 and/or the feeders 120. The second THz sensor 140 may also be translated, as for THz sensor 114. Advantageously, both translations are operated the same way for both, so that both are on top of each other, i.e. colinear.

In an embodiment, both the THz sensors 114, 140 are configured to irradiate the multi-layer tire tread extrudate with a pulsed THz electromagnetic radiation. THz sensors 114, 140 are synchronized so that the THz sensors alternatively emit pulsed THz electromagnetic radiation and both receive a response of the multi-layer tire tread extrudate to the alternative pulsed THz electromagnetic radiation.

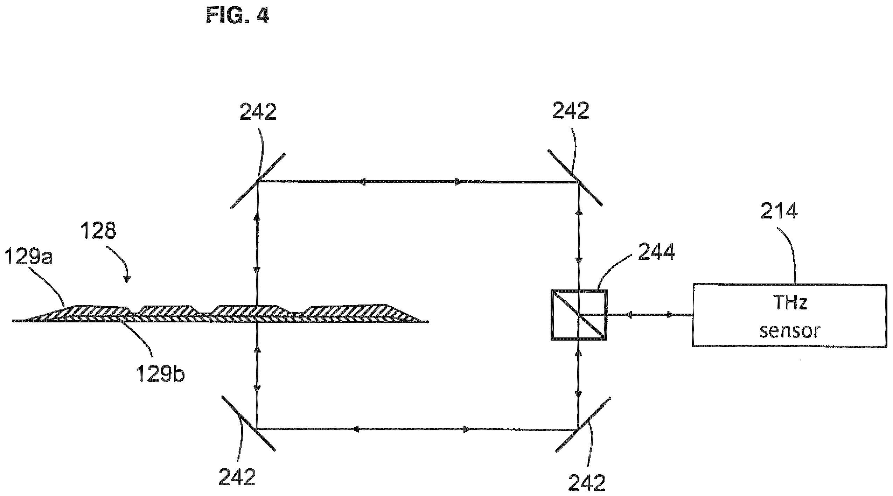

While, in the above embodiments, the THz sensors 114, 140 are disclosed as being below and/or above the tire tread, other arrangements are also contemplated. For example, as shown in FIG. 4, a THz sensor 214 may be arranged on the side of the tire tread extrudate and the THz radiation may be directed above (upper optical branch) and/or below (lower optical branch) the tire tread by e.g. mirrors 242 and a beam splitter 244. Of course, any other beam separation apparatus other than a beam splitter is contemplated. For example, a system switching between the upper branch and the lower branch of the optical path as a function of time may offer advantages. The switching may be regular (periodic) or irregular in time. The mirrors 242 may be translated so as to enable scanning the tire tread extrudate in a direction transversal to the conveying direction.

## Claims

1. A tire tread production line comprising:
a coextruder (12) for coextruding at least two rubber compositions, the coextruder (12) comprising at least two feeding inlets (22) for receiving the at least two rubber compositions, the coextruder (12) further comprising one or at least two screws (24) for driving the received at least two rubber compositions, an extrusion die (26) for forming a multi-layer tire tread extrudate (128), the one or the at least two screws (24) being configured to drive the at least two rubber compositions in the extrusion die (26);
a THz sensor (14), the THz sensor being configured to irradiate the multi-layer tire tread extrudate (28) with THz electromagnetic radiation, and receiving a response of the multi-layer tire tread extrudate (28) to the THz electromagnetic radiation; and
a controller (18) operatively connected to the coextruder (12) and to the THz sensor (14), the controller (18) being configured to operate the coextruder (12) based on the response of the multi-layer tire tread extrudate (28) to the THz electromagnetic radiation.

2. The tire tread production line according to claim 1, further comprising a conveyor belt (16) for conveying the multi-layer tire tread extrudate (28) from the coextruder (12) to the THz sensor (14).

3. The tire tread production line according to claim 1 or 2, the controller (18) being configured to determine a thickness of at least one of the layers (29a, 29b) of the multi-layer tire tread extrudate (28) based on the response of the multi-layer tire tread extrudate (28) to the THz electromagnetic radiation, and the controller (18) being configured to operate the coextruder (12) based on the determined thickness.

4. The tire tread production line according to at least one of the previous claims, wherein the response of the multi-layer tire tread extrudate (28) to the THz electromagnetic radiation comprises one or more echoes of the THz electromagnetic radiation, the one or more echoes being reflection and/or transmission of the THz electromagnetic radiation on one or more interfaces of the multi-layer tire tread extrudate.

5. The tire tread production line according to at least one of the previous claims, further comprising a second THz sensor (140) arranged opposite from the THz sensor (14) with respect to the multi-layer tire tread extrudate (28), the controller (18) being further configured to operate the coextruder (12) based on a response, received by the second THz sensor (140), of the multi-layer tire tread extrudate (28) to the THz electromagnetic radiation.

6. The tire tread production line according to claim 5, wherein the second THz sensor (140) is arranged below the multi-layer tire tread extrudate (12), and the THz sensor (14) is arranged above the multi-layer tire tread extrudate (12).

7. The tire tread production line according to claim 5 or 6, wherein the second THz sensor (140) and the THz sensor (14) are arranged collinearly.

8. The tire tread production line according to at least one of the previous claims, wherein the coextruder (12) comprises a pressure sensor for sensing the pressure of at least one of the at least two rubber compositions in the coextruder, the controller (18) being further configured to operate the coextruder (12) based on the sensed pressure.

9. The tire tread production line according to at least one of the previous claims, wherein the controller (18) is configured to operate the one or the at least two screws based on the response of the multi-layer tire tread extrudate (28) to the THz electromagnetic radiation.

10. The tire tread production line according to at least one of the previous claims, comprising a refractive index increaser feeder (20), the controller (18) being operatively connected to refractive index increaser feeder (20), and the controller (18) being configured to add refractive index increaser in at least one of the least two rubber compositions so as to increase a difference of refractive index of the at least two rubber compositions, based on the response of the multi-layer tire tread extrudate (28) to the THz electromagnetic radiation.

11. The tire tread production line according to claim 10, wherein the refractive index increaser comprises at least one of carbon black, titanium dioxide and aluminum hydroxide.

12. A method for manufacturing a tire tread, the method comprising:
coextruding at least two rubber compositions with a coextruder (12), the coextruding comprising feeding the at least two rubber compositions in the coextruder (12), driving the received at least two rubber compositions with one or with at least two screws (24), forming, by an extrusion die (26), a multi-layer tire tread extrudate (28) with the driven rubber compositions;
irradiating, with a THz sensor (14), the multi-layer tire tread extrudate (28) with THz electromagnetic radiation;
receiving, with the THz sensor (14), a response of the multi-layer tire tread extrudate (28) to the THz electromagnetic radiation;
operating the coextruder (12), with a controller (18) operatively connected to the coextruder (12), based on the response of the multi-layer tire tread extrudate (28) to the THz electromagnetic radiation.

13. The method according to claim 12, comprising determining, by the controller (18), a thickness of at least one of the layers (29a, 29b) of the multi-layer tire tread extrudate (28) based on the response of the multi-layer tire tread extrudate (28) to the THz electromagnetic radiation; and operating, by the controller (18), the coextruder (12) based on the determined thickness.
